# EUROPEAN PATENT APPLICATION

(11) **EP 4 350 587 A1**
(43) Date of publication of application: **10.04.2024**
(21) Application number: 22811315.5
(22) Date of filing: 24.05.2022
(51) Int. Cl.: G06Q 10/00, G06Q 50/06, H01M 10/48, H02J 13/00

(54) **POWER STORAGE SYSTEM DATA COLLECTION DEVICE, POWER STORAGE SYSTEM DATA COLLECTION METHOD, AND PROGRAM**

(30) Priority: 24.05.2021 JP 2021087123
(71) Applicant: Jera Co., Inc., Tokyo 103-6125 (JP)
(72) Inventor: OZAKI Ryoichi, Tokyo 103-6125 (JP); SAKURAI Yuta, Tokyo 103-6125 (JP); KOGURE Hirofumi, Tokyo 103-6125 (JP); MORIYAMA Tomohiro, Tokyo 103-6125 (JP)
(74) Representative: Krauns, Christian
(86) International application number: PCT/JP2022/021228
(87) International publication number: WO 2022/250045

(57) **Abstract**

A power storage system data collection device includes a data collection unit configured to collect operational data of a power storage system from the power storage system, a data processing unit configured to generate processed data by processing the operational data collected by the data collection unit, and a data transmission unit configured to transmit the processed data generated by the data processing unit to a data platform, in which the data processing unit includes an address information unit that stores or acquires address information indicating at which address of the operational data an item that needs to be subjected to address conversion to generate the processed data among the operational data collected by the data collection unit is present, and the address information is different for each manufacturer of components of the power storage system.

## Description

### [Technical Field]

The present invention relates to a power storage system data collection device, a power storage system data collection method, and a program.

Priority is claimed on Japanese Patent Application No. 2021-087123, filed May 24, 2021, the content of which is incorporated herein by reference.

### [Background Art]

Conventionally, a power storage battery monitoring system that includes an information collection unit for collecting power storage battery information related to a power storage battery, and a communication unit for transmitting the collected power storage battery information to a monitoring device via a predetermined communication path is known (for example, refer to Patent Document 1). In the technology described in Patent Document 1, the information collection unit can collect power storage battery information including various types of information related to a power storage battery (for example, information on an operation status, a charge amount, a discharge amount, a remaining charge (SOC), error information, and the like).

In the technology described in Patent Document 1, the power storage battery information is used for normal operation of a power storage battery. That is, in the technology described in Patent Document 1, the power storage battery information is used by a power storage battery maintenance or management company or the like to perform maintenance or management on the power storage battery.

Moreover, conventionally, a power storage battery control system that includes a power storage battery and a power storage battery operational data collection unit for collecting operational data of the power storage battery is known (for example, refer to Patent Document 2). In the technology described in Patent Document 2, the operational data of the power storage battery is time series sampling data such as a charging or discharging current value, a voltage value, a remaining charge (SOC), a temperature, a system mode, and the like of the power storage battery.

In the technology described in Patent Document 2, the operational data of a power storage battery is used to predict a life of the power storage battery. That is, in the technology described in Patent Document 2, the operational data of the power storage battery is used by, for example, a power storage battery maintenance or management company to perform maintenance or management on the power storage battery.

### [Citation List]

### [Patent Document]

[Patent Document 1]
   Japanese Unexamined Patent Application, First Publication No. 2017-062619
[Patent Document 2]
   Japanese Unexamined Patent Application, First Publication No. 2014-163875

### [Summary of Invention]

### [Technical Problem]

The inventors of the present invention have found that it is possible to provide a new service that meets the needs of users of a power storage system (a power storage battery) by using operational data of the power storage system (the power storage battery) similar to the power storage battery information, the operational data of the power storage battery, and the like described above.

On the other hand, as described above, conventionally, since the operational data of the power storage system has been used only for the maintenance or management of the power storage battery, a data format of the operational data of the power storage system is different for each manufacturer of the components of the power storage system.

In detail, items included in the operational data of the power storage system (the power storage battery) are mostly the same among manufacturers of the components of a plurality of power storage systems, but addresses at which each of the plurality of items included in the operational data of the power storage system are present are different for each manufacturer of the components of the power storage system.

Therefore, the inventors of the present invention have described that the new service described above is also useful for manufacturers of power storage systems, and have been provided with information related to a data format of the operational data of the power storage system from the manufacturers of the components of the plurality of power storage systems.

Furthermore, on the basis of the information, the inventors of the present invention have developed a power storage system data collection device capable of generating processed data with a unified data format based on the operational data of a plurality of power storage systems with different data formats.

That is, an object of the present invention is to provide a power storage system data collection device, a power storage system data collection method, and a program that can improve utilization efficiency of electric power by utilizing operational data of a power storage system as useful data for users of the power storage system and manufacturers of components of the power storage system.

### [Solution to Problem]

According to one aspect of the present invention, a power storage system data collection device includes a data collection unit configured to collect operational data of a power storage system from the power storage system, a data processing unit configured to generate processed data by processing the operational data collected by the data collection unit, and a data transmission unit configured to transmit the processed data generated by the data processing unit to a data platform, in which the data processing unit includes an address information unit that stores or acquires address information indicating at which address of the operational data an item that needs to be subjected to address conversion to generate the processed data among the operational data collected by the data collection unit is present, and the address information is different for each manufacturer of components of the power storage system.

In the power storage system data collection device according to one aspect of the present invention, the data processing unit may include an address conversion unit that performs the address conversion on the basis of the address information.

In the power storage system data collection device according to one aspect of the present invention, the address conversion unit may perform the address conversion by using any one of a plurality of different conversion tables for each manufacturer of components of the power storage system.

In the power storage system data collection device according to one aspect of the present invention, the address conversion unit may include a conversion table selection unit that selects one conversion table to be used for the address conversion from the plurality of conversion tables.

In the power storage system data collection device according to one aspect of the present invention, addresses of each of a plurality of items included in processed data generated by the data processing unit processing operational data of a power storage system including components manufactured by a first manufacturer may be the same as addresses of each of the plurality of items included in processed data generated by the data processing unit processing operational data of a power storage system including components manufactured by a second manufacturer.

In the power storage system data collection device according to one aspect of the present invention, the data processing unit may further include a minute unit data processing unit that generates minute unit data every minute by processing the operational data collected every second by the data collection unit.

In the power storage system data collection device according to one aspect of the present invention, the data processing unit may further include a cooperation unit data processing unit that processes the minute unit data generated every minute by the minute unit data processing unit into cooperation unit data which is data in a data format to be transmitted to the data platform.

In the power storage system data collection device according to one aspect of the present invention, the data processing unit may further include an external output data processing unit that processes the cooperation unit data into external output data which is data in a data format to be output to an external storage medium.

In the power storage system data collection device according to one aspect of the present invention, the power storage system data collection device may be an IoT device to be connected to the power storage system.

According to another aspect of the present invention, a power storage system data collection method includes a data collection step of collecting operational data of a power storage system from the power storage system, a data processing step of generating processed data by processing the operational data collected in the data collection step, and a data transmission step of transmitting the processed data generated in the data processing step to a data platform, in which, in the data processing step, address information indicating at which address of the operational data an item that needs to be subjected to address conversion to generate the processed data among the operational data collected in the data collection step is present is stored or acquired, and the address information is different for each manufacturer of components of the power storage system.

According to still another aspect of the present invention, a program causes a computer to execute a data collection step of collecting operational data of a power storage system from the power storage system, a data processing step of generating processed data by processing the operational data collected in the data collection step, and a data transmission step of transmitting the processed data generated in the data processing step to a data platform, in which, in the data processing step, address information indicating at which address of the operational data an item that needs to be subjected to address conversion to generate the processed data among the operational data collected in the data collection step is present is stored or acquired, and the address information is different for each manufacturer of components of the power storage system.

### [Advantageous Effects of Invention]

According to the present invention, it is possible to provide a power storage system data collection device, a power storage system data collection method, and a program that can improve utilization efficiency of electric power by utilizing operational data of a power storage system as useful data for users of the power storage system and manufacturers of components of the power storage system.

### [Brief Description of Drawings]

FIG. 1 is a diagram which shows an example of a power storage system data collection device and the like of a first embodiment.
FIG. 2 is a diagram for describing an example of a flow of operational data of a power storage system in the power storage system and a flow of operational data of the power storage system between the power storage system and the power storage system data collection device.
FIG. 3 is a diagram which shows an example of operational data of a power storage system including a power storage battery manufactured by a first manufacturer and an example of operational data of a power storage system including a power storage battery manufactured by a second manufacturer.
FIG. 4 is a diagram which shows an example of a conversion table to be used for address conversion of the operational data of the power storage system including the power storage battery manufactured by the first manufacturer and an example of a conversion table to be used for address conversion of the operational data of the power storage system including the power storage battery manufactured by the second manufacturer.
FIG. 5 is a diagram for describing a result (processed data) of address conversion performed by an address conversion unit.
FIG. 6 is a diagram for describing an example of processing executed in the power storage system data collection device of the first embodiment.
FIG. 7 is a diagram for describing a detailed example of processing (minute unit data processing) executed in step S16 of FIG. 6.
FIG. 8 is a diagram for describing a detailed example of processing (cooperation unit data processing) executed in step S17 of FIG. 6.
FIG. 9 is a diagram for describing a detailed example of processing (external output data processing) executed in step S18 of FIG. 6.
FIG. 10 is a diagram which shows an example of a power storage system included in a system to which a power storage system data collection device of a second embodiment is applied.

### [Description of Embodiments]

Hereinafter, embodiments of a power storage system data collection device, a power storage system data collection method, and a program of the present invention will be described with reference to the drawings.

### [First embodiment]

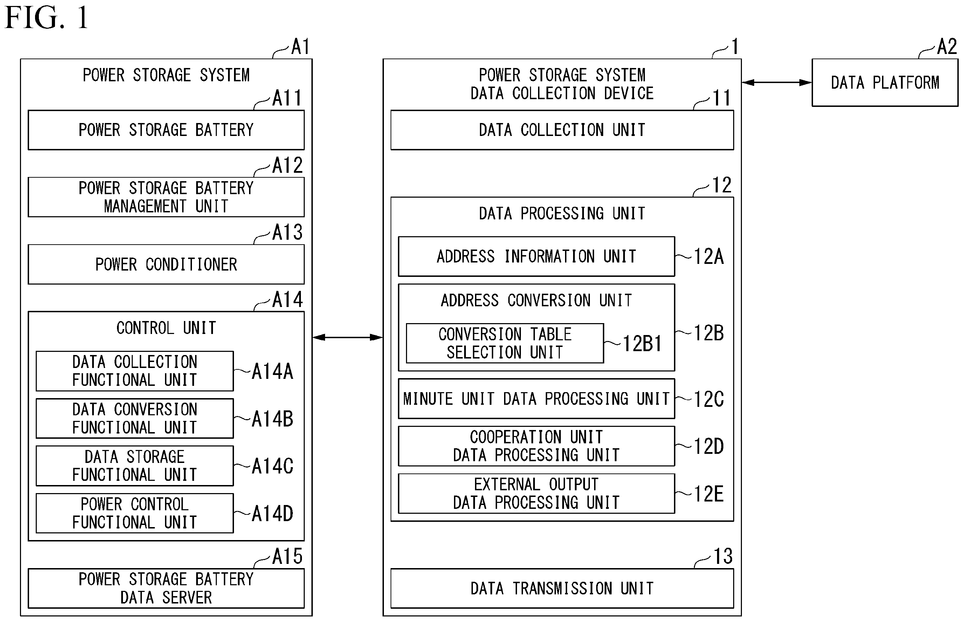

FIG. 1 is a diagram which shows an example of a power storage system data collection device 1 and the like of the first embodiment. Specifically, FIG. 1 shows an example of a system to which the power storage system data collection device 1 of the first embodiment is applied.

The system shown in FIG. 1 includes a power storage system A1, a power storage system data collection device 1, and a data platform A2.

In the example shown in FIG. 1, for example, electric power purchased from an electric power company during periods of time when electricity rates are low or the like is stored in the power storage system A1. The electric power stored in the power storage system A1 is used by users of the power storage system A1, for example, during power outages, during periods of time when electricity rates are high, or the like.

In another example, electric power other than the electric power purchased from an electric power company (for example, electric power obtained by a fuel cell power generation system) may be stored in the power storage system A1.

In the example shown in FIG. 1, the power storage system A1 includes a power storage battery A11, a power storage battery management unit A12, a power conditioner A13, a control unit A14, and a power storage battery data server A15. The power storage battery A11 stores electric power.

The power storage battery management unit A12 is also referred to as a battery management system (BMS), and manages information regarding the voltage, current, state of charge (SOC), and temperature of the power storage battery A11. Specifically, the power storage battery management unit A12 executes various controls necessary to obtain information regarding the voltage, current, SOC, and temperature of the power storage battery A11. The information regarding the voltage, current, SOC and temperature of the power storage battery A11 and control information of the power storage battery management unit A12 correspond to operational data of the power storage system A1.

The power conditioner A13 is also referred to as a power conditioning subsystem (PCS), and executes control such as control to convert direct current electric power stored in the power storage battery A11 into alternative current electric power. Control information of the power conditioner A13 corresponds to the operational data of the power storage system A1. The control unit A14 executes various types of processing and control. For example, a programmable (logic) controller (PLC) functions as the control unit A14.

In the example shown in FIG. 1, the control unit A14 includes a data collection functional unit A14A, a data conversion functional unit A14B, a data storage functional unit A14C, and a power control functional unit A14D.

The data collection functional unit A14A collects the information regarding the voltage, current, SOC, and temperature of the power storage battery A11, the control information of the power storage battery management unit A12, and the control information of the power conditioner A13 (the operational data of the power storage system A1). In other words, the data collection functional unit A14A collects internal data such as a charge or discharge electric power amount and a power storage battery charge amount, system side data such as an amount of electric power received, and the like as the operational data of the power storage system A1.

The data conversion functional unitA14B converts the information regarding the voltage, current, SOC, and temperature of the power storage battery A11 collected by the data collection functional unit A14A, the control information of the power storage battery management unit A12, and the control information of the power conditioner A13 (the operational data of the power storage system A1) into a predetermined data format. The data storage functional unit A14C stores the information regarding the voltage, current, SOC, and temperature of the power storage battery A11 converted into a predetermined data format by the data conversion functional unit A14B, the control information of the power storage battery management unit A12, and the control information of the power conditioner A13 (the operational data of the power storage system A1). The power control functional unit A14D executes various types of power control on the basis of the information regarding the voltage, current, SOC, and temperature of the power storage battery A11.

In another example, a configuration of the control unit A14 may differ from the configuration shown in FIG. 1.

In the example shown in FIG. 1, the power storage battery data server A15 stores the information regarding the voltage, current, SOC, and temperature of the power storage battery A11 converted into a predetermined data format by the data conversion functional unit A14B, the control information of the power storage battery management unit A12, and the control information of the power conditioner A13 (the operational data of the power storage system A1). The power storage battery data server A15 is managed by, for example, a manufacturer of the power storage battery A11 of the power storage system A1. The operational data of the power storage system A1 stored in the power storage battery data server A15 is used for maintenance, management, and the like of the power storage battery A11.

The power storage system data collection device 1 is an Internet of Things (IoT) device connected to the power storage system A1. The power storage system data collection device 1 includes a data collection unit 11, a data processing unit 12, and a data transmission unit 13.

The data collection unit 11 collects operational data of the power storage system A1 (information regarding a voltage, a current, an SOC, and a temperature of the power storage battery A11, control information of the power storage battery management unit A12, and control information of the power conditioner A13) from the power storage system A1.

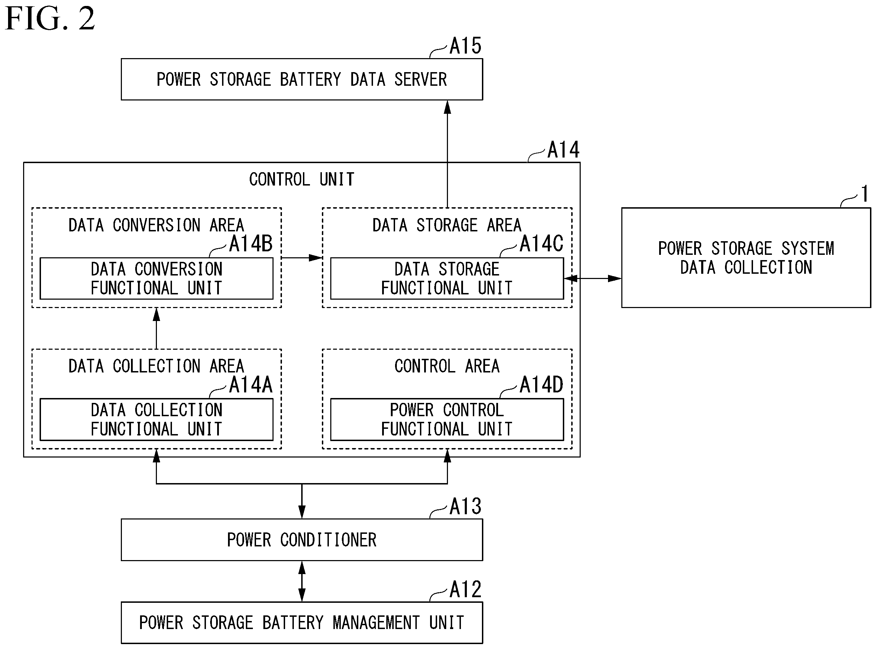

FIG. 2 is a diagram for describing an example of a flow of the operational data of the power storage system A1 in the power storage system A1 and a flow of the operational data of the power storage system A1 between the power storage system A1 and the power storage system data collection device 1.

In the example shown in FIG. 2, the operational data of the power storage system A1 includes not only the information regarding the voltage, current, SOC, and temperature of the power storage battery A11, but also the control information of the power storage battery management unit A12, and the control information of the power conditioner A13.

The control information of the power storage battery management unit A12 is collected by the power storage battery data server A15 and the data collection unit 11 (refer to FIG. 1) of the power storage system data collection device 1 via the power conditioner A13, and the data collection functional unit A14A, the data conversion functional unit A14B, and the data storage functional unit A14C of the control unit A14.

The control information of the power conditioner A13 is collected by the power storage battery data server A15 and the data collection unit 11 of the power storage system data collection device 1 via the data collection functional unit A14A, the data conversion functional unit A14B, and the data storage functional unit A14C of the control unit A14. The information regarding the voltage, current, SOC, and temperature of the power storage battery A11 managed by the power storage battery management unit A12 is collected by the power storage battery data server A15 and the data collection unit 11 of the power storage system data collection device 1 via the power conditioner A13, and the data collection functional unit A14A, the data conversion functional unit A14B, and the data storage functional unit A14C of the control unit A14.

A data format of the operational data of the power storage system A1 collected by the data collection unit 11 (and the power storage battery data server A15) of the power storage system data collection device 1 is different for each manufacturer of components of the power storage system A1. Specifically, a data format of the information regarding the voltage, current, SOC, and temperature of the power storage battery A11 is different for each manufacturer of the power storage battery A11 of the power storage system A1. A data format of the control information of the power storage battery management unit A12 is different for each manufacturer of the power storage battery management unit A12 of the power storage system A1. A data format of the control information of the power conditioner A13 is different for each manufacturer of the power conditioner A13 of the power storage system A1.

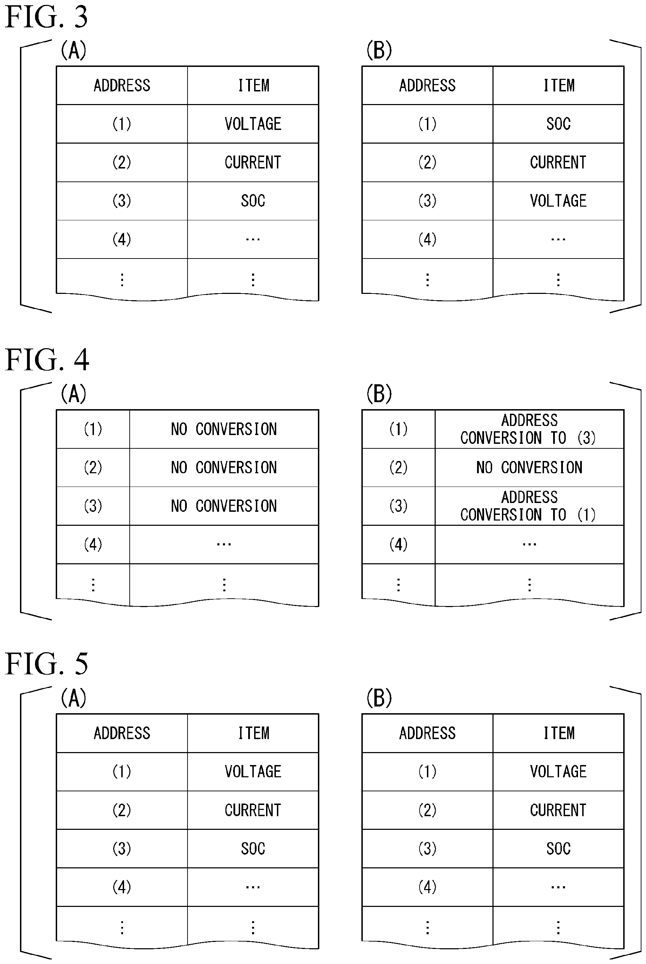

FIG. 3 is a diagram which shows an example of the operational data of the power storage system A1 including the power storage battery A11 manufactured by the first manufacturer and an example of the operational data of the power storage system A1 including the power storage battery A11 manufactured by the second manufacturer. Specifically, FIG. 3A shows an example of the operational data of the power storage system A1 including the power storage battery A11 manufactured by the first manufacturer, and FIG. 3B shows an example of the operational data of the power storage system A1 including the power storage battery A11 manufactured by the second manufacturer.

In the example shown in FIG. 3A, an item "voltage" is present at an address (1) of the operational data of the power storage system A1 including the power storage battery A11 manufactured by the first manufacturer. In addition, an item "current" is present at an address (2) of the operational data of the power storage system A1 including the power storage battery A11 manufactured by the first manufacturer, and an item "SOC" is present at an address (3) thereof.

On the other hand, in the example shown in FIG. 3B, the item "SOC" is present at the address (1) of the operational data of the power storage system A1 including the power storage battery A11 manufactured by the second manufacturer. In addition, the item "current" is present at the address (2) of the operational data of the power storage system A1 including the power storage battery A11 manufactured by the second manufacturer, and the item "voltage" is present at the address (3) thereof.

As in the examples shown in FIGS. 3A and 3B, a data format of the operational data of the power storage system A1 (for example, which item is present at which address, and the like) is different for each manufacturer of the power storage battery A1 1 of the power storage system A1.

Therefore, in the example shown in FIG. 1, the data processing unit 12 generates processed data by processing the operational data of the power storage system A1 collected by the data collection unit 11. The data processing unit 12 includes an address information unit 12A, an address conversion unit 12B, a minute unit data processing unit 12C, a cooperation unit data processing unit 12D, and an external output data processing unit 12E.

In another example, the data processing unit 12 may not include the minute unit data processing unit 12C.

In the example shown in FIG. 1, the address information unit 12A stores address information that indicates at which address of the operational data of the power storage system A1 collected by the data collection unit 11 an item that needs to be subjected to address conversion to generate processed data among the operational data of the power storage system A1 is present.

In the example shown in FIG. 3A, the address information unit 12A stores address information that indicates an item that needs to be subjected to address conversion to generate processed data among the operational data of the power storage system A1 collected by the data collection unit 11 is not present at the address (1), the address (2), and the address (3) of the operational data of the power storage system A1.

In the example shown in FIG. 3B, the address information unit 12A stores address information that indicates an item that needs to be subjected to address conversion to generate processed data among the operational data of the power storage system A1 collected by the data collection unit 11 is present at the address (1) and the address (3) of the operational data of the power storage system A1.

As shown in the examples in FIGS. 3A and 3B, the address information indicating at which address of the operational data of the power storage system A1 collected by the data collection unit 11 the item that needs to be subjected to address conversion to generate processed data among the operational data of the power storage system A1 is present is different for each manufacturer of the power storage battery A1 1 of the power storage system A1.

In the example shown in FIG. 1, the address information unit 12A stores address information that indicates at which address of the operational data of the power storage system A1 collected by the data collection unit 11 an item that needs to be subjected to address conversion to generate processed data among the operational data of the power storage system A1 is present.

In another example, the address information unit 12A may also acquire address information that indicates at which address of the operational data of the power storage system A1 collected by the data collection unit 11 an item that needs to be subjected to address conversion to generate processed data among the operational data of the power storage system A1 is present from, for example, the data platform A2 and the like.

In the example shown in FIG. 1, the address conversion unit 12B performs address conversion on the basis of address information indicating at which address of the operational data of the power storage system A1 collected by the data collection unit 11 an item that needs to be subjected to address conversion to generate processed data among the operational data of the power storage system A1 is present. The address conversion unit 12B includes a conversion table selection unit 12B1.

The conversion table selection unit 12B1 selects one conversion table to be used for address conversion from a plurality of conversion tables that are different for each manufacturer of the power storage battery A11 of the power storage system A1.

The address conversion unit 12B performs address conversion by using one of the plurality of conversion tables that are different for each manufacturer of the power storage battery A11 of the power storage system A1. Specifically, the address conversion unit 12B performs address conversion by using one conversion table selected by the conversion table selection unit 12B1 among the plurality of different conversion tables for each manufacturer of the power storage battery A11 of the power storage system A1.

FIG. 4 shows an example of a conversion table to be used for address conversion of the operational data of the power storage system A1 including the power storage battery A11 manufactured by the first manufacturer and an example of a conversion table to be used for address conversion of the operational data of the power storage system A1 including the power storage battery A11 manufactured by the second manufacturer. Specifically, FIG. 4A shows an example of a conversion table to be used for address conversion of the operational data of the power storage system A1 including the power storage battery A11 manufactured by the first manufacturer, and FIG. 4B shows an example of a conversion table to be used for address conversion of the operational data of the power storage system A1 including the power storage battery A11 manufactured by the second manufacturer.

When the conversion table shown in FIG. 4A is selected by the conversion table selection unit 12B1, the address conversion unit 12B does not perform address conversion on an item present at the address (1) of the operational data of the power storage system A1. That is, the address conversion unit 12B does not move the item present at the address (1) of the operational data of the power storage system A1 to an address other than the address (1).

Moreover, when the conversion table shown in FIG. 4A is selected by the conversion table selection unit 12B1, the address conversion unit 12B does not perform address conversion on an item present at the address (2) of the operational data of the power storage system A1. That is, the address conversion unit 12B does not move the item present at the address (2) of the operational data of the power storage system A1 to an address other than the address (2).

Furthermore, when the conversion table shown in FIG. 4A is selected by the conversion table selection unit 12B1, the address conversion unit 12B does not perform address conversion on an item present at the address (3) of the operational data of the power storage system A1. That is, the address conversion unit 12B does not move the item present at the address (3) of the operational data of the power storage system A1 to an address other than the address (3).

When the conversion table shown in FIG. 4B is selected by the conversion table selection unit 12B1, the address conversion unit 12B performs address conversion on the item present at the address (1) of the operational data of the power storage system A1. Specifically, the address conversion unit 12B moves the item present at the address (1) of the operational data of the power storage system A1 to the address (3).

In addition, when the conversion table shown in FIG. 4B is selected by the conversion table selection unit 12B1, the address conversion unit 12B does not perform address conversion on an item present at the address (2) of the operational data of the power storage system A1. That is, the address conversion unit 12B does not move the item present at the address (2) of the operational data of the power storage system A1 to an address other than the address (2).

Moreover, when the conversion table shown in FIG. 4B is selected by the conversion table selection unit 12B1, the address conversion unit 12B performs address conversion on an item present at the address (3) of the operational data of the power storage system A1. Specifically, the address conversion unit 12B moves the item present at the address (3) of the operational data of the power storage system A1 to the address (1) thereof.

FIG. 5 is a diagram for describing a result (processed data) of the address conversion performed by the address conversion unit 12B. Specifically, FIG. 5A shows a result (processed data) of the address conversion performed on the operational data of the power storage system A1 including the power storage battery A11 manufactured by the first manufacturer shown in FIG. 3A by using the conversion table shown in FIG. 4A. FIG. 5B shows a result (processed data) of the address conversion performed on the operational data of the power storage system A1 including the power storage battery A11 manufactured by the second manufacturer shown in FIG. 3B by using the conversion table shown in FIG. 4B.

In the example shown in FIG. 5A, the conversion table shown in FIG. 4A is used to perform address conversion on the operational data of the power storage system A1 including the power storage battery A11 manufactured by the first manufacturer shown in FIG. 3A.

For this reason, the address conversion is not performed on the item present at the address (1) of the operational data of the power storage system A1 including the power storage battery A11 manufactured by the first manufacturer shown in FIG. 3A. As a result, the item "voltage" is present at the address (1) of the processed data shown in FIG. 5A.

In addition, the address conversion is not performed on the item present at the address (2) of the operational data of the power storage system A1 including the power storage battery A11 manufactured by the first manufacturer shown in FIG. 3A. As a result, the item "current" is present at the address (2) of the processed data shown in FIG. 5A.

Moreover, the address conversion is not performed on the item present at the address (3) of the operational data of the power storage system A1 including the power storage battery A11 manufactured by the first manufacturer shown in FIG. 3A. As a result, the item "SOC" is present at the address (3) of the processed data shown in FIG. 5A.

In the example shown in FIG. 5B, the conversion table shown in FIG. 4B is used to perform address conversion on the operational data of the power storage system A1 including the power storage battery A11 manufactured by the second manufacturer shown in FIG. 3B.

For this reason, the address conversion is performed on an item present at the address (1) of the operational data of the power storage system A1 including the power storage battery A11 manufactured by the second manufacturer shown in FIG. 3B. Specifically, the item present at the address (1) of the operational data of the power storage system A1 including the power storage battery A11 manufactured by the second manufacturer shown in FIG. 3B is moved to the address (3) thereof.

In addition, the address conversion is performed on an item present at the address (3) of the operational data of the power storage system A1 including the power storage battery A11 manufactured by the second manufacturer shown in FIG. 3B. Specifically, the item present at the address (3) of the operational data of the power storage system A1 including the power storage battery A11 manufactured by the second manufacturer shown in FIG. 3B is moved to the address (1) thereof.

As a result, the item "voltage" is present at the address (1) of the processed data shown in FIG. 5B. Moreover, the item "SOC" is present at the address (3) of the processed data shown in FIG. 5B.

Furthermore, the address conversion is not performed on an item present at the address (2) of the operational data of the power storage system A1 including the power storage battery A11 manufactured by the second manufacturer shown in FIG. 3B. As a result, the item "current" is present at the address (2) of the processed data shown in FIG. 5B.

That is, in the examples shown in FIGS. 3 to 5, addresses of each of a plurality of items included in processed data (refer to FIG. 5A) generated by the data processing unit 12 processing the operational data (refer to FIG. 3A) of a power storage system A1 including the power storage battery A11 manufactured by the first manufacturer are the same as addresses of each of a plurality of items included in processed data (refer to FIG. 5B) generated by the data processing unit 12 processing the operational data (refer to FIG. 3B) of the power storage system A1 including the power storage battery A1 1 manufactured by the second manufacturer.

Specifically, an address (1) of the item "voltage" included in the processed data shown in FIG. 5A is the same as an address (1) of the item "voltage" included in the processed data shown in FIG. 5B. In addition, an address (2) of the item "current" included in the processed data shown in FIG. 5A is the same as an address (2) of the item "current" included in the processed data shown in FIG. 5B. Furthermore, an address (3) of the item "SOC" included in the processed data shown in FIG. 5A is the same as an address (3) of the item "SOC" included in the processed data shown in FIG. 5B.

Similarly, in an example to which the power storage system data collection device 1 of the first embodiment is applied, an address of the item "voltage" included in the processed data (not shown) generated by the data processing unit 12 processing the operational data (not shown) of the power storage system A1 including a power storage battery A11 manufactured by an N^{th} (N is an integer of 3 or more) manufacturer is the same as the address (1) of the item "voltage" included in the processed data shown in FIGS. 5A and 5B. In addition, an address of the item "current" included in the processed data generated by the data processing unit 12 processing the operational data of the power storage system A1 including the power storage battery A11 manufactured by the N^{th} manufacturer is the same as the address (2) of the item "current" included in the processed data shown in FIGS. 5A and 5B. Furthermore, an address of the item "SOC" included in the processed data generated by the data processing unit 12 processing the operational data of the power storage system A1 including the power storage battery A11 manufactured by the N^{th} manufacturer is the same as the address (3) of the item "SOC" included in the processed data shown in FIGS. 5A and 5B.

In the example shown in FIG. 1, the minute unit data processing unit 12C generates minute unit data every minute by processing the operational data of the power storage system A1 collected every second by the data collection unit 11.

The cooperation unit data processing unit 12D processes the minute unit data generated every minute by the minute unit data processing unit 12C into cooperation unit data, which is data in a data format to be transmitted to the data platform A2.

In an example in which the data processing unit 12 described above does not include the minute unit data processing unit 12C, the cooperation unit data processing unit 12D generates cooperation unit data, which is data in a data format to be transmitted to the data platform A2, by processing the operational data of the power storage system A1 collected every second by the data collection unit 11.

In the example shown in FIG. 1, the external output data processing unit 12E processes the cooperation unit data generated by the cooperation unit data processing unit 12D into external output data which is data in a data format to be output to an external storage medium (for example, a universal serial bus (USB) memory or the like).
The data transmission unit 13 transmits processed data (the cooperation unit data) generated by the data processing unit 12 to the data platform A2.

The data platform A2 receives the processed data (the cooperation unit data) transmitted by the data transmission unit 13 of the power storage system data collection device 1. In addition, the data platform A2 generates useful data for the users of the power storage system A1 on the basis of the processed data (the cooperation unit data). Furthermore, the data platform A2 provides the useful data for the users of the power storage system A1 to the users of the power storage system A1.

For this reason, the users of the power storage system A1 can effectively use the power storage system A1 by utilizing the data provided by the data platform A2, and as a result, can improve utilization efficiency of electric power.

In this manner, an increase in the number of the users of the power storage system A1 can be expected by providing useful data for the users of the power storage system A1 from the data platform A2 to the users of the power storage system A1. In other words, beneficial results can be expected for manufacturers of the components of the power storage system A1.

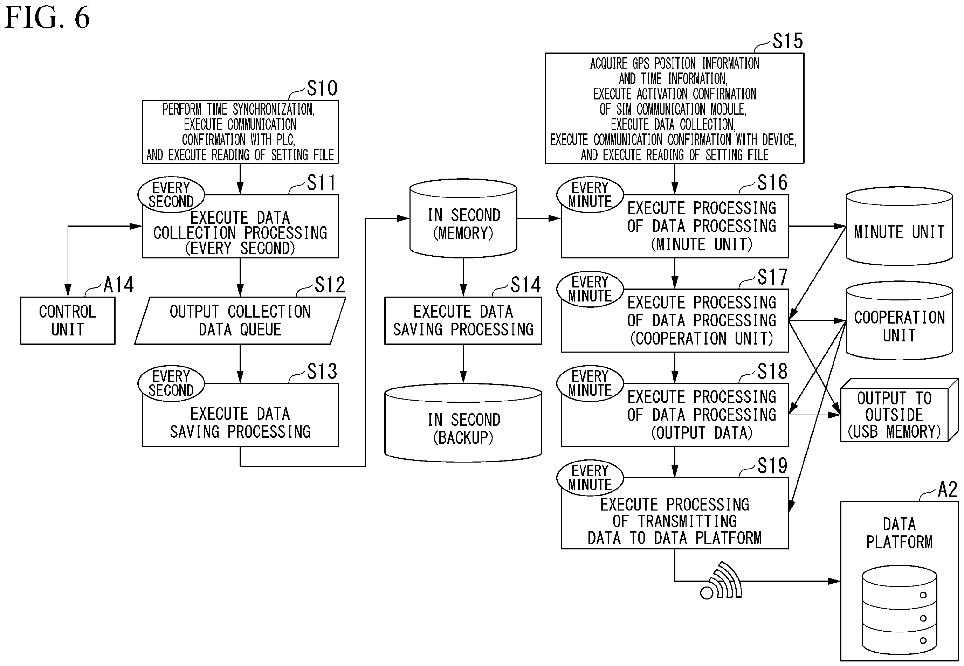

FIG. 6 is a diagram for describing an example of processing to be executed in the power storage system data collection device 1 of the first embodiment.

In the example shown in FIG. 6, the power storage system data collection device 1 performs time synchronization in step S10. In addition, the power storage system data collection device 1 executes communication confirmation with the control unit A14 (PLC). Moreover, the power storage system data collection device 1 executes reading of a setting file.

Next, in step S11, the data collection unit 11 of the power storage system data collection device 1 collects the operational data of the power storage system A1 from the power storage system A1. Specifically, the data collection unit 11 collects the operational data of the power storage system A1 every second.

Next, in step S12, the power storage system data collection device 1 outputs a collection data queue.

Next, in step S13, the power storage system data collection device 1 executes data saving processing. Specifically, the power storage system data collection device 1 performs data saving processing every second. In the data saving processing in step S13, data in seconds is saved in the memory.

In addition, the power storage system data collection device 1 executes data saving processing in step S14. In the data saving processing in step S14, data in seconds is saved as a backup.

Moreover, in step S15, the power storage system data collection device 1 acquires global positioning system (GPS) position information and time information. In addition, the power storage system data collection device 1 executes activation confirmation of a SIM communication module. Moreover, the power storage system data collection device 1 executes communication confirmation with a data collection device. The power storage system data collection device 1 additionally executes reading of a setting file.

Next, in step S16, the minute unit data processing unit 12C of the power storage system data collection device 1 generates minute unit data every minute by processing the operational data of the power storage system A1 collected every second in step S11.

In the example in which the data processing unit 12 described above does not include the minute unit data processing unit 12C, step S16 is not executed.

In the example shown in FIG. 6, next, in step S17, the cooperation unit data processing unit 12D of the power storage system data collection device 1 processes the minute unit data generated every minute in step S16 into the cooperation unit data (processed data), which is data in a data format to be transmitted to the data platform A2.

In the example in which the data processing unit 12 does not include the minute unit data processing unit 12C, in step S17, the cooperation unit data processing unit 12D processes the operational data of the power storage system A1 collected every second in step S11 into the cooperation unit data (processed data), which is data in a data format to be transmitted to the data platform A2.

In the example shown in FIG. 6, next, in step S18, the external output data processing unit 12E of the power storage system data collection device 1 processes the cooperation unit data generated in step S17 into external output data which is data in a data format to be output to the external storage medium (such as a USB memory).

Next, in step S19, the data transmission unit 13 of the power storage system data collection device 1 transmits the processed data (cooperation unit data) generated in step S17 to the data platform A2.

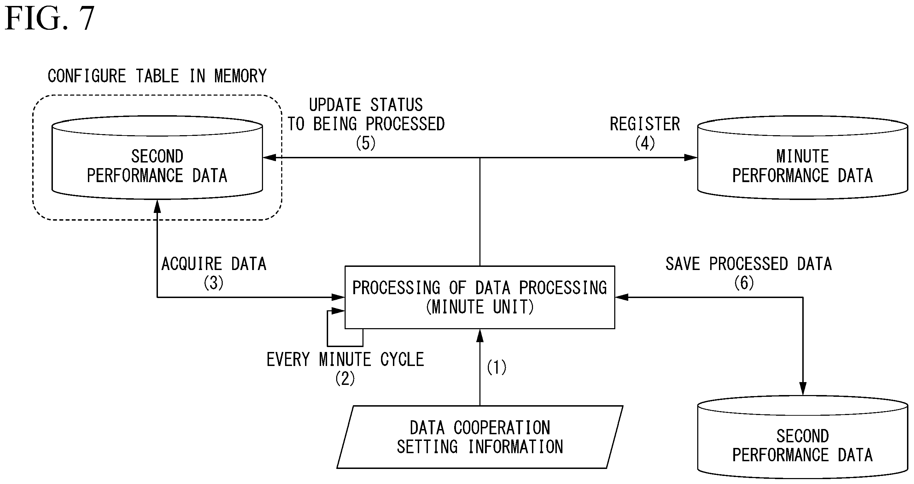

FIG. 7 is a diagram for describing a detailed example of the processing (processing of minute unit data processing) executed in step S16 of FIG. 6.

In the example shown in FIG. 7, among the operational data of the power storage system A1 (second performance data) collected every second by the data collection unit 11 of the power storage system data collection device 1 in step S11 of FIG. 6, the operational data of the power storage system A1 in seconds closest to 00 seconds of each time is selected and registered as minute unit data (minute performance data).

Specifically, as shown by (1) in FIG. 7, first, data cooperation setting information is input to the minute unit data processing unit 12C of the power storage system data collection device 1.

Next, as shown by (2) and (3) in FIG. 7, the minute unit data processing unit 12C generates minute unit data (minute performance data) by acquiring and processing second performance data every minute (every minute cycle).

Next, as shown by (4) in FIG. 7, the minute unit data processing unit 12C registers the minute performance data.

Next, as indicated by (5) in FIG. 7, a status of the second performance data acquired by the minute unit data processing unit 12C is updated to "being processed." Next, as shown by (6) in FIG. 7, the processed second performance data is saved.

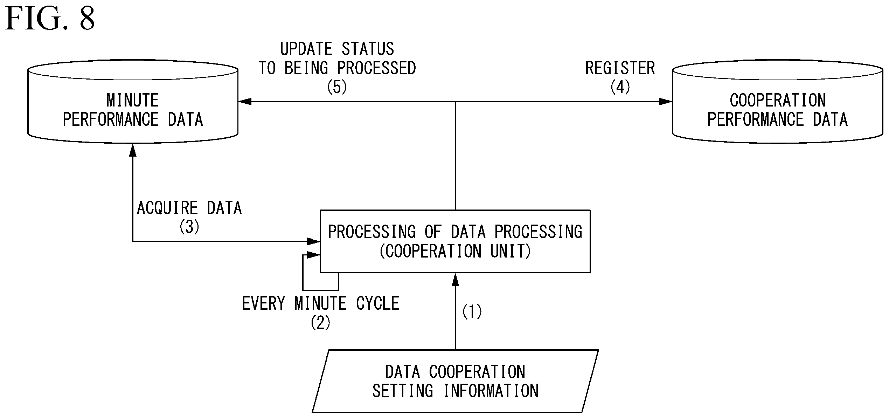

FIG. 8 is a diagram for describing a detailed example of the processing (processing of cooperation unit data processing) executed in step S17 of FIG. 6.

In the example shown in FIG. 8, minute unit data (minute performance data) is processed into cooperation unit data (processed data), which is data in a data format to be transmitted to the data platform A2. 60 minutes of data are aligned and transmitted to the data platform A2.

Specifically, as shown by (1) in FIG. 8, first, the data cooperation setting information is input to the cooperation unit data processing unit 12D of the power storage system data collection device 1.

Next, as shown by (2) and (3) in FIG. 8, the cooperation unit data processing unit 12D generates cooperation unit data (cooperation performance data) by acquiring and processing the minute performance data every minute (every minute cycle).

Next, as shown by (4) in FIG. 8, the cooperation unit data processing unit 12D registers the cooperation performance data.

Next, as shown by (5) in FIG. 8, the status of the minute performance data acquired by the cooperation unit data processing unit 12D is updated to "being processed."

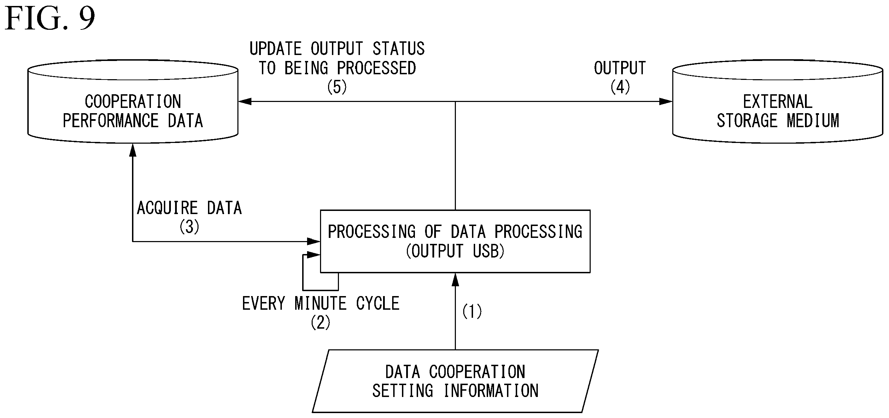

FIG. 9 is a diagram for describing a detailed example of the processing (processing of external output data processing) executed in step S18 of FIG. 6.

In the example shown in FIG. 9, cooperation unit data is processed into external output data, which is data in a data format to be output to an external storage medium (for example, USB memory or the like).

Specifically, as shown by (1) in FIG. 9, first, the data cooperation setting information is input to the external output data processing unit 12E of the power storage system data collection device 1.

Next, as shown by (2) and (3) in FIG. 9, the external output data processing unit 12E generates external output data by acquiring and processing the cooperation performance data every minute (every minute cycle).

Then, as shown by (4) in FIG. 9, the external output data processing unit 12E outputs the external output data to the external storage medium.

Next, as shown by (5) in FIG. 9, the status of the cooperation performance data acquired by the external output data processing unit 12E is updated to "being processed."

As described above, FIG. 3 has exemplified "voltage," "current," and "SOC" as items included in the operational data of the power storage system A1.

In another example, the operational data of the power storage system A1 includes, for example, items such as a "battery stack voltage," a "battery stack current," "battery stack power," a "battery stack SOC," a "battery string voltage," a "battery string current," "battery string electric power," a "battery string SOC," a "battery cell voltage," a "battery cell temperature," "active electric power," "reactive electric power," "apparent electric power," a "current of each phase," a "voltage of each phase," a "line voltage," a "frequency," a "DC voltage," a "DC current," "DC electric power," and a "temperature of each phase AC/DC conversion element."

The "battery stack voltage," "battery stack current," "battery stack electric power," "battery stack SOC," "battery string voltage," "battery string current," "battery string electric power," "battery string SOC," "battery cell voltage," and "battery cell temperature" correspond to information related to BMS (the power storage battery management unit A12).

The "active electric power," "reactive electric power," "apparent electric power," "current of each phase," "voltage of each phase," "line voltage," "frequency," "DC voltage," "DC current," "DC electric power," and "temperature of each phase AC/DC conversion element" correspond to information related to PCS (the power conditioner A13).

### [Second embodiment]

A second embodiment of the power storage system data collection device, the power storage system data collection method, and the program of the present invention will be described below.

The power storage system data collection device 1 of the second embodiment is configured in the same manner as the power storage system data collection device 1 of the first embodiment described above, except for points to be described below. Therefore, according to the power storage system data collection device 1 of the second embodiment, the same effects as those of the power storage system data collection device 1 of the first embodiment can be achieved, except for points to be described below.

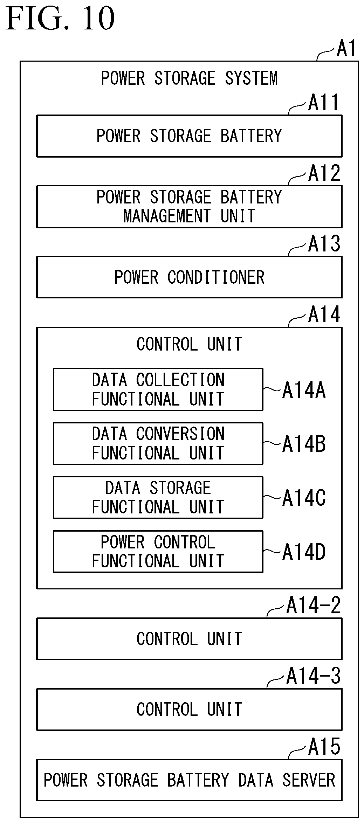

FIG. 10 is a diagram which shows an example of the power storage system A1 included in a system to which the power storage system data collection device 1 of the second embodiment is applied.

In an example of a system to which the power storage system data collection device 1 of the second embodiment is applied, as in the example shown in FIG. 1, electric power purchased from an electric power company during periods of time when electricity rates are low or the like is stored in the power storage system A1. The electric power stored in the power storage system A1 is used by the users of the power storage system A1, for example, during power outages, during periods of time when electricity rates are high, or the like.

Furthermore, in this example, electric power generated by a photovoltaic power generation device is stored in the power storage system A1, and is used by the users of the power storage system A1, for example, during power outages, during periods of time when electricity rates are high, or the like.

In the example shown in FIG. 10, the power storage system A1 includes a power storage battery A11, a power storage battery management unit A12, a power conditioner A13, a control unit A14, a control unit A14-2, a control unit A14-3, and a power storage battery data server A15.

The control unit A14 functions in the same manner as the control unit A14 shown in FIG. 1. More specifically, the control unit A14 has a function of collecting internal data such as a charge or discharge electric power amount, and a power storage battery charge amount as the operational data of the power storage system A1, and the like.

The control unit A14-2 has a function of collecting data such as an amount of electric power received, an amount of solar power generated, and an amount of electric power received within a facility as the operational data of the power storage system A1, and the like.

The control unit A14-3 has a function of converting the operational data of the power storage system A1 collected by the control unit A14 and the control unit A14-2 into a predetermined data format.

The power storage battery data server A15 stores the operational data of the power storage system A1 converted into a predetermined data format by the control unit A14-3.

The data collection unit 11 of the power storage system data collection device 1 of the second embodiment collects the operational data of the power storage system A1 from the control unit A14-3 of the power storage system A1.

Although the embodiments of the present invention have been described in detail above with reference to the drawings, a specific configuration is not limited to these embodiments and examples, and appropriate changes can be added within a range not departing from the gist of the present invention. The constituents as described in each embodiment and each example descried above may also be combined.

It should be noted that all or part of functions of each unit provided in the power storage system data collection device 1 in the embodiments described above may be realized by recording a program for realizing these functions in a computer-readable recording medium, and causing a computer system to read the program recorded in this recording medium and to execute it. A term "computer system" used herein includes an OS and hardware such as peripheral devices.

In addition, "computer-readable recording medium" refers to a portable medium such as a flexible disk, a magneto-optical disc, a ROM, or a CD-ROM, or a storage unit such as a hard disk embedded in a computer system. Furthermore, the "computer-readable recording medium" may include a medium that dynamically holds a program for a short period of time, like a communication line for transmitting a program via a network such as the Internet or a communication line such as a telephone line, and a medium that holds a program for a certain period of time, like a volatile memory inside a computer system that serves as a server or client in this case. Moreover, the program described above may be a program for realizing part of the functions described above, or may be a program capable of realizing the functions described above in combination with a program already recorded in the computer system.

### [Reference Signs List]

1 Power storage system data collection device
11 Data collection unit
12 Data processing unit
12A Address information unit
12B Address conversion unit
12B 1 Conversion table selection unit
12C Minute unit data processing unit
12D Cooperation unit data processing unit
12E External output data processing unit
13 Data transmission unit
A1 Power storage system
A11 Power storage battery
A12 Power storage battery management unit
A13 Power conditioner
A14 Control unit
A14A Data collection functional unit
A14B Data conversion functional unit
A14C Data storage functional unit
A14D Power control functional unit
A15 Power storage battery data server
A2 Data platform

## Claims

1. A power storage system data collection device comprising:
a data collection unit configured to collect operational data of a power storage system from the power storage system;
a data processing unit configured to generate processed data by processing the operational data collected by the data collection unit; and
a data transmission unit configured to transmit the processed data generated by the data processing unit to a data platform,
wherein the data processing unit includes an address information unit that stores or acquires address information indicating at which address of the operational data an item that needs to be subjected to address conversion to generate the processed data among the operational data collected by the data collection unit is present, and
the address information is different for each manufacturer of components of the power storage system.

2. The power storage system data collection device according to claim 1,
wherein the data processing unit includes an address conversion unit that performs the address conversion on the basis of the address information.

3. The power storage system data collection device according to claim 2,
wherein the address conversion unit performs the address conversion by using any one of a plurality of different conversion tables for each manufacturer of components of the power storage system.

4. The power storage system data collection device according to claim 3,
wherein the address conversion unit includes a conversion table selection unit that selects one conversion table to be used for the address conversion from the plurality of conversion tables.

5. The power storage system data collection device according to claim 1,
wherein addresses of each of a plurality of items included in processed data generated by the data processing unit processing operational data of a power storage system including components manufactured by a first manufacturer are the same as addresses of each of the plurality of items included in processed data generated by the data processing unit processing operational data of a power storage system including components manufactured by a second manufacturer.

6. The power storage system data collection device according to claim 1,
wherein the data processing unit includes a minute unit data processing unit that generates minute unit data every minute by processing the operational data collected every second by the data collection unit.

7. The power storage system data collection device according to claim 6,
wherein the data processing unit includes a cooperation unit data processing unit that processes the minute unit data generated every minute by the minute unit data processing unit into cooperation unit data which is data in a data format to be transmitted to the data platform.

8. The power storage system data collection device according to claim 7,
wherein the data processing unit includes an external output data processing unit that processes the cooperation unit data into external output data which is data in a data format to be output to an external storage medium.

9. The power storage system data collection device according to any one of claims 1 to 8,
wherein the power storage system data collection device is an IoT device to be connected to the power storage system.

10. A power storage system data collection method comprising:
a data collection step of collecting operational data of a power storage system from the power storage system;
a data processing step of generating processed data by processing the operational data collected in the data collection step; and
a data transmission step of transmitting the processed data generated in the data processing step to a data platform,
wherein, in the data processing step, address information indicating at which address of the operational data an item that needs to be subjected to address conversion to generate the processed data among the operational data collected in the data collection step is present is stored or acquired, and
the address information is different for each manufacturer of components of the power storage system.

11. A program that causes a computer to execute:
a data collection step of collecting operational data of a power storage system from the power storage system;
a data processing step of generating processed data by processing the operational data collected in the data collection step; and
a data transmission step of transmitting the processed data generated in the data processing step to a data platform,
wherein, in the data processing step, address information indicating at which address of the operational data an item that needs to be subjected to address conversion to generate the processed data among the operational data collected in the data collection step is present is stored or acquired, and
the address information is different for each manufacturer of components of the power storage system.
